## Europäisches Patentamt
## European Patent Office
## Office européen des brevets

(19)

(11) Veröffentlichungsnummer: **0 052 182**
**B1**

(12) **EUROPÄISCHE PATENTSCHRIFT**

(45) Veröffentlichungstag der Patentschrift:
**15.02.84**

(51) Int. Cl.³: **B 60 H 1/14**, F 01 M 5/00

(21) Anmeldenummer: **81106307.2**

(22) Anmeldetag: **13.08.81**

(54) **Heizungssystem in Verbindung mit einer Brennkraftmaschine.**

(30) Priorität: **18.11.80 DE 3043457**

(43) Veröffentlichungstag der Anmeldung:
**26.05.82 Patentblatt 82/21**

(45) Bekanntmachung des Hinweises auf die Patenterteilung:
**15.02.84 Patentblatt 84/7**

(84) Benannte Vertragsstaaten:
**AT CH DE FR GB IT LI SE**

(56) Entgegenhaltungen:
**DE - A - 2 916 870**
**DE - B - 1 233 204**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Moser, Gottfried, Steinknippen 22,**
**D-5060 Bergisch Gladbach 2 (DE)**
Erfinder: **Nau, Walter, Dipl.-Ing.,**
**Johann-Pullem-Strasse 8, D-5000 Köln 50 (DE)**
Erfinder: **Neumann, Ernst D., Dipl.-Ing., Pfeilstrasse 2,**
**D-5100 Aachen (DE)**

Heizungssystem in Verbindung mit einer Brennkraftmaschine

Die Erfindung betrifft ein Heizungssystem in Verbindung mit einer Brennkraftmaschine entsprechend dem Oberbegriff des Hauptanspruchs.

Es ist eine Anordnung der genannten Gattung bereits zur Anwendung gekommen (KHD-Motor F 413), bei der sowohl die Hochdruckförderpumpe als auch das Druckabbauelement ausserhalb der Brennkraftmaschine angeordnet und über aussenliegende Leitungen mit dem Inneren der Brennkraftmaschine verbunden sind. Unbefriedigend und zum Teil schadensanfällig ist dabei vor allem der äussere Verlauf von bruchgefährdeten Hochdruckleitungen und leckagebehafteten Rohrverbindungen.

Der Erfindung liegt die Aufgabe zugrunde, ein Heizungssystem in Verbindung mit einer Brennkraftmaschine, deren Ölinhalt als Heizmittel dient, und das mit einer Hochdruckförderpumpe und einem Druckabbauelement arbeitet, im Sinne einer erhöhten Betriebssicherheit und einer herabgesetzten Unfallgefahr zu verbessern.

Die Lösung hierfür besteht in einer Brennkraftmaschine mit den Merkmalen entsprechend dem Kennzeichen des ersten Patentanspruchs. In vorteilhafter Weise liegt hierbei die Hochdruckleitung von der Hochdruckförderpumpe zum Druckabbauelement innerhalb des Gehäuses der Brennkraftmaschine, so dass evtl. Undichtigkeiten, die vorwiegend in diesem Bereich auftreten könnten, keinen unerwünschten äusseren Ölauswurf und vor allem keine Gefährdung der Brennkraftmaschine durch unkontrollierten Ölverlust verursachen können. Im Schadensfall geht allein die Heizwirkung der Anordnung verloren, eine Verletzungsgefahr durch einen mit ca. 150 bar austretenden Ölstrahl ist durch die Anordnung innerhalb der Ölwanne bzw. des Motorgehäuses ganz aufgehoben. Die Vereinigung von Druckhalteventil und dazu im Bypass angeordnetem Steuerventil in einem Gehäuse reduziert darüberhinaus die Zahl der Leitungsführungen.

Durch die erfindungsgemässe Anordnung des Gehäuses für Druckabbauelement und Steuerventil ist es möglich, die Zahl der Leitungsdurchtritte durch die Gehäusewand zu reduzieren bzw. auf diese ganz zu verzichten, indem das Gehäuse selber dichtend gegenüber der Wandung der Brennkraftmaschine angeordnet wird.

In besonders günstiger erfindungsgemässer Weise wird vorgeschlagen, ein Schmierölfilter mit dem Druckhalteventil und dem Steuerventil in einem Gehäuse zusammenzufassen bzw. mit deren Gehäuse unmittelbar zu verbinden und unmittelbar aussen an der Wandung der Brennkraftmaschine anzuordnen. Ggfs. können hierbei Steuerorgane für eine Kurzschlussleitung zwischen der Vorlaufleitung und einer Rücklaufleitung des Wärmetauschers bzw. diese Kurzschlussleitung selber ebenfalls innerhalb dieser Baueinheit angeordnet sein. Hierdurch sind nur die Niederdruckleitungen zum Wärmetauscher, die unmittelbar an dieses kompakte Aggregat angeschlossen werden, ausserhalb der Brennkraftmaschine angeordnet.

In weiterer erfindungsgemässer Ausgestaltung können das Druckabbauelement und das Steuerventil innerhalb des Gehäuses der Brennkraftmaschine an deren Wandung angeordnet und dabei zugleich mit der Hochdruckförderpumpe verbunden werden. Dadurch kann die Hochdruckleitung vollkommen entfallen.

In besonders bevorzugter Ausgestaltung wird bei der zuletzt beschriebenen Ausführung das Betätigungselement des Steuerventils, das vorzugsweise aus einem Hubmagneten bestehen kann, ausserhalb einer Abdichtung des Gehäuses für das Druckabbauelement und das Steuerventil gegenüber der Wandung der Brennkraftmaschine angebracht, wobei die entsprechenden Steuerleitungen ausschliesslich ausserhalb der Brennkraftmaschine verlaufen. Hierdurch wird der empfindliche Steuerungsteil vor dem Ölnebel und der Temperatur innerhalb der Brennkraftmaschine in vorteilhafter Weise geschützt.

Prinzipskizzen der verschiedenen Anordnungen des Druckabbauelementes, des Steuerventils sowie der übrigen ggfs. damit verbundenen Anlagenteile in bezug auf die Wandung der Brennkraftmaschine sind in den Zeichnungen dargestellt.

Fig. 1 zeigt Druckabbauelement und Steuerventil in einem aussen an der Wandung der Brennkraftmaschine angeordneten Gehäuse.
Fig. 2 zeigt Gehäuse für Steuerorgane und Schmierölfilter, verbunden mit einem Gehäuse nach Fig. 1.
Fig. 3 zeigt Druckabbauelement und Steuerventil in einem innen an der Wandung der Brennkraftmaschine angeordneten, mit der Hochdruckförderpumpe verbundenen Gehäuse.

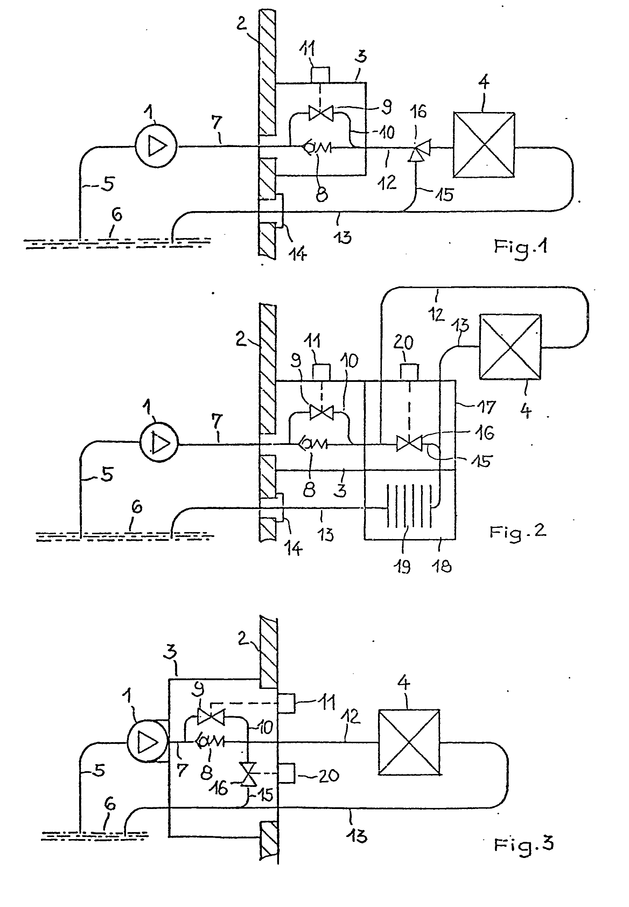

In Fig. 1 ist eine Hochdruckförderpumpe 1 innerhalb einer Brennkraftmaschine angeordnet, die durch einen Teil ihrer Wandung 2 angedeutet ist, wobei links dieser Wandung das Innere und rechts dieser Wandung die Umgebung der Brennkraftmaschine anzunehmen ist. Ausserhalb der Brennkraftmaschine befinden sich ein Gehäuse 3, das unmittelbar an der Wandung 2 angeordnet ist, sowie ein Wärmetauscher 4 in einiger Entfernung davon. Die Hochdruckförderpumpe 1 ist über eine Saugleitung 54 mit dem Ölsumpf 6 der Brennkraftmaschine verbunden und beaufschlagt über eine Druckleitung 7 ein Druckabbauelement 8, beispielsweise ein Druckhalteventil, das gemeinsam mit einem Steuerventil 9 in dem Gehäuse 3 angeordnet ist, wobei das Steuerventil 9 in einer Bypassleitung 10 zum Druckabbauelement 8 liegt. Das Steuerventil 9 weist ein Betätigungselement 11 auf, das z.B. als Hubmagnet, aber auch als pneumatisches oder hydraulisches Stellglied ausgebildet sein kann.

An das Druckabbauelement 8 schliesst sich eine Vorlaufleitung 12 zum Wärmetauscher 4 an, von dem aus eine Rücklaufleitung 13 über einen Durchtritt 14 in der Wandung 2 der Brennkraftmaschine zurück zum Ölsumpf 6 führt. Zwischen Vorlaufleitung 12 und Rücklaufleitung 13 ist eine Kurzschlussleitung 15 angeordnet, die von einem Steuerorgan 16 beherrscht wird.

In Fig. 2 ist bei gleicher Bezifferung im wesentlichen die gleiche Grundanordnung wie in Fig. 1 dargestellt. Abweichend sind jedoch mit dem Gehäuse 3 ein weiteres Gehäuse oder Gehäuseteil 17 für das Steuerorgan 16 in der Kurzschlussleitung 15 und ein drittes Gehäuse oder Gehäuseteil 18 für einen Schmierölfilter 19 in der Rücklaufleitung 13 zu einer Einheit verbunden. Das Steuerorgan 16 in der Bypassleitung 15 zwischen Vorlaufleitung 12 und Rücklaufleitung 13 weist ein Betätigungselement 20 auf, das genauso wie das Betätigungselement 11 ein Hubmagnet oder eine sonstige Verstelleinrichtung sein kann. Das Schmierölfilter 19 ist ohne Einzelheiten wie überdruckgesteuerte Umgehungsleitung und dergl. dargestellt.

In Fig. 3 ist das Gehäuse 3 für das Druckabbauelement 8 und das Steuerventil 9 innerhalb der Brennkraftmaschine, also links der Wandung 2 angeordnet und enthält zugleich einen Teil der Rücklaufleitung 13 vom Wärmetauscher 4 sowie die Kurzschlussleitung 15 mit dem Steuerorgan 16. Die Hochdruckförderpumpe 1 ist unmittelbar an das Gehäuse 3 angeflanscht. Das Gehäuse ist so an der Wandung 2 angeordnet, dass die Verbindungen mit der Vorlaufleitung 12 und der Rücklaufleitung 13 sowie die Betätigungselemente 11 und 20 gegenüber dem Inneren der Brennkraftmaschine abgedichtet sind. Hiermit befinden sich nur die unter niedrigem Druck stehenden Vorlauf- und Rücklaufleitungen sowie die ggfs. temperaturempfindlichen Steuerorgane ausserhalb der Brennkraftmaschine, während alle anderen Teile des Heizungssystems als kompakte Einheit innerhalb derselben angeordnet sind in einer Weise, die die Hochdruckleitung 7 in massive Gehäuse 1, 3 einbezieht.

**Patentansprüche**

1. Heizsystem in Verbindung mit einer Brennkraftmaschine, deren Ölinhalt als Heizmittel dient und eine Erwärmung erfährt in einer Vorrichtung, die gebildet ist mit einer Hochdruckförderpumpe (1), die über eine Saugleitung (5) mit dem Ölsumpf (6) der Brennkraftmaschine verbunden ist, mit einem Druckabbauelement (8), das über eine Druckleitung (7) von der Hochdruckförderpumpe (1) beaufschlagt wird und mit einem Steuerventil (9), das eine Bypassleitung (10) parallel zum Druckabbauelement (8) beherrscht, sowie einem Wärmetauscher (4), der über eine Vorlaufleitung (12) mit dem Druckabbauelement (8) verbunden ist, dadurch gekennzeichnet, dass die Hochdruckförderpumpe (1) innerhalb der Brennkraftmaschine angeordnet ist und dass das Druckabbauelement (8) und das Steuerventil (9) ein gemeinsames Gehäuse (3) aufweisen, das unmittelbar an einer Wandung (2) der Brennkraftmaschine angeordnet ist, wobei die Druckleitung (7) von der Hochdruckförderpumpe (1) innerhalb der Brennkraftmaschine und die Vorlaufleitung (12) zum Wärmetauscher (4) ausserhalb der Brennkraftmaschine verläuft.

2. Heizungssystem nach Anspruch 1, dadurch gekennzeichnet, dass das Gehäuse (3) für das Druckabbauelement (8) und das Steuerventil (9) aussen an einer Wandung (2) der Brennkraftmaschine angeordnet sind und mit einem Ölfilter (19) und/oder weiteren Steuerorganen (16) für das Heizungssystem, insbesondere für eine Kurzschlussleitung (15) zwischen der Vorlaufleitung (12) und einer Rücklaufleitung (13) des Wärmetauschers (4), unmittelbar verbunden sind.

3. Heizungssystem nach einem der Ansprüche 1 oder 2, dadurch gekennzeichnet, dass die Rücklaufleitung (13) vom Wärmetauscher (4) am Gehäuse (3) für das Druckabbauelement (8) und das Steuerventil (9) ausserhalb der Brennkraftmaschine anschliesst.

4. Heizungssystem nach Anspruch 1, dadurch gekennzeichnet, dass das Gehäuse (3) für das Druckabbauelement (8) und das Steuerventil (9) innen an einer Wandung (2) der Brennkraftmaschine angeordnet und mit der Hochdruckförderpumpe (1) unmittelbar verbunden sind.

5. Heizungssystem nach einem der vorhergehenden Ansprüche, dadurch gekennzeichnet, dass die Betätigungselemente (11, 20) des Steuerventils (9) und/oder weiterer Steuerorgane (16) des Heizungssystem gegenüber dem Inneren der Brennkraftmaschine abgedichtet sind und ihre Anschlussstellen für Steuerleitungen von ausserhalb der Brennkraftmaschine zugänglich sind.

**Revendications**

1. Système de chauffage combiné à un moteur à combustion interne, dont le contenu d'huile sert de fluide de chauffage et subit un réchauffage dans un dispositif qui est formé par une pompe de déplacement à haute pression (1), laquelle est reliée, par une conduite d'aspiration (5) au carter d'huile (6) du moteur avec un élément de réduction de pression (8), qui est chargé, à travers une conduite sous pression (7) par la pompe à haute pression (1) et avec une soupape de commande (9), qui contrôle une conduite de by-pass (10), en parallèle avec l'élément de réduction de pression (8), ainsi qu'un échangeur de chaleur (4) qui est relié, par une conduite de départ de chauffage (12) à l'élément de réduction de pression (8), système caractérisé en ce que la pompe à haute pression (1) est disposée à l'intérieur du moteur, et que l'élément de réduction de pression (8) et la soupape de commande (9) présentent un carter commun (3) qui est monté directement sur une paroi (2) du moteur, auquel cas la conduite sous pression (7) de la pompe à haute pression (1) s'étend à l'intérieur du moteur et la conduite de départ de chauffage (12) s'étend vers l'échan-

3

geur de chaleur (4) à l'extérieur du moteur.

2. Système suivant la revendication 1, caractérisé en ce que le carter (3) pour l'élément de réduction de pression (8) et la soupape de commande (9) sont disposés extérieurement sur une paroi (2) du moteur, et ils sont reliés directement à un filtre à huile (19) et/ou d'autres organes de commande (16) pour l'installation de chauffage, notamment pour une conduite de court-circuit (15) entre la conduite de départ de chauffage (12) et une conduite de retour (13) de l'échangeur de chaleur (4).

3. Système de chauffage suivant l'une des revendications 1 ou 2, caractérisé en ce que la conduite de retour (3) de l'échangeur de chaleur (4) est raccordée au carter (3), pour l'élément de réduction de pression (8) et la soupape de commande (9), extérieurement au moteur.

4. Système de chauffage suivant la revendication 1, caractérisé en ce que le carter (3), pour l'élément de réduction de pression (8) et la soupape de commande (9), est disposé, à l'intérieur, sur une paroi (2) du moteur, et ces éléments sont reliés directement à la pompe à haute pression (1).

5. Système suivant l'une quelconque des revendications 1 à 4, caractérisé en ce que les éléments d'actionnement (11, 20) de la soupape de commande (9), et/ou d'autres organes de commande (16) de l'installation de chauffage sont isolés de manière étanche par rapport à l'intérieur du moteur et leurs emplacements de raccordement pour des conduites de commande sont accessibles à partir de l'extérieur du moteur à combustion.

**Claims**

1. A heating system combined with an internal combustion engine the oil of which serves as a heating medium and is itself heatable by apparatus comprising:
a high-pressure feed pump (1) connected by a suction duct (5) to the sump (6) of the internal combusiton engine, a pressure-reducing element (8) actuable via a feed duct (7) by the high-pressure feed pump (1), a control valve (9) controlling a by-pass duct (10) by-passing the pressure-reducing element (8), and a heat exchanger (4) connected by a transmitting duct (12) to the pressure-reducing element (8), characterized in that the high-pressure feed pump (1) is arranged inside the internal combustion engine, that the pressure-reducing element (8) and the control valve (9) are disposed in a common casing (3) arranged directly on a wall (2) of the internal combustion engine, and in that the feed duct (7) from the high-pressure feed pump (1) extends inside the internal combustion engine and the transmitting duct (12) to the heat exchanger (4) extends outside the internal combustion engine.

2. A heating system according to claim 1, characterized in that the common casing (3) is arranged on the external face of the wall (2) of the internal combustion engine and the pressure-reducing element (8) and the control valve (9) are connected directly to an oil filter (19) and/or to a further control element (16) or elements for the heating system, particularly for another by-pass duct (15) extending between the transmitting duct (12) and the return duct (13) from the heat exchanger (4).

3. A heating system according to claim 1 or claim 2, characterized in that the return duct (13) from the heat exchanger (4) joins the casing (3) for the pressure-reducing element (8) and the control valve (9) outside the internal combustion engine.

4. A heating system according to claim 1, characterized in that the casing (3) is arranged on the internal face of the wall (2) of the internal combustion engine and the pressure-reducing element (8) and the control valve (9) are connected directly to the high-pressure feed pump (1).

5. A heating system according to any of the preceding claims, characterized in that the actuating elements (11, 20) of the control valve (9) and/or of the further control element (16) or elements for the heating system are sealed from the interior of the internal combustion engine, and in that their joints with control ducts are accessible from outside the internal combustion engine.

0 052 182

Fig.1

Fig.2

Fig.3

5